(19) Europäisches Patentamt
European Patent Office
Office européen des brevets

(11) **EP 1 936 998 A2**

(12) **EUROPEAN PATENT APPLICATION**

(43) Date of publication:
**25.06.2008 Bulletin 2008/26**

(51) Int Cl.:
***H04N 7/50*** (2006.01)     ***H04N 7/26*** (2006.01)

(21) Application number: **07254847.2**

(22) Date of filing: **13.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.12.2006 JP 2006340670**

(71) Applicant: **Hitachi, Ltd.**
**Chiyoda-ku**
**Tokyo 100-8220 (JP)**

(72) Inventors:
• **Murakami, Tomokazu,**
**c/o Hitachi, Ltd.,**
**Intell. Prop. Group**
**Tokyo 100-8220 (JP)**

• **Hamada, Koichi,**
**c/o Hitachi, Ltd.,**
**Intell. Prop. Group**
**Tokyo 100-8220 (JP)**
• **Yamaguchi, Muneaki,**
**c/o Hitachi, Ltd.,**
**Intell. Prop. Group**
**Tokyo 100-8220 (JP)**

(74) Representative: **Calderbank, Thomas Roger et al**
**MEWBURN ELLIS**
**York House**
**23 Kingsway**
**London WC2B 6HP (GB)**

(54) **Decoding method and coding method**

(57) A decoding method for a motion picture, for reducing coding bits of coded data, and for preventing a decoded picture from deterioration in picture quality thereof, comprises a step for receiving information relating to motion search, a step for conducting the motion search with using a reference picture to be memorized and the information relating to said motion search, and a step for producing a prediction picture from the motion vector, which is obtained with said motion search, and the reference picture to be recoded. Also, a coding process is conducted for producing a flag indicating of conduction of motion search on a decoding side, corresponding to that decoding process.

**FIG.3**

INTERPOLATE PREDICTION     EXTRAPOLATE PREDICTION

301   302   303     304   305   306

**Description**

The present invention relates to a decoding method or a decoding apparatus for decoding coded video data, and also relates to a coding method or a coding apparatus for coding video.

As a method for recording or transmitting video and audio information after converting it into digital data, there is already determined a regulation, i.e., H264/AVC (Advanced Video Coding).

With this H264/AVCmethod, within a coding unit of each frame, being called "microblock", it is possible to select such a pattern that picture quality comes to be the maximum with respect to coding bits, among various patterns for predicted coding. Such the patter for this is called "coding mode" (please see Non-Patent Document 1).

Within the coding modes within the H264/AVC method, there are the followings: i.e., a mode for conducting motion predicted compensation by dividing sizes of the microblock into 16x8 or 8x16, or 8x8 or 4x4, to be small, assuming that the size of the microblock is 16x16 pixels, or a mode not transmitting motion vectors, being called "skip mode" or "direct mode", etc.

[Non-Patent Document 1] Joint Video Team (JVT) of ISO/IEC MPEG & ITU-T VCEG: "Text of International Standard of Joint Video Specification", ITU-T Rec. H264|ISO/IEC 14496-10 Advanced Video Coding, (December, 2003).

However, with the existing skip mode or direct mode, prediction is made with using motion vectors of others than the coding target blocks. For this reason, it is not always possible to achieve the prediction with high accuracy, and there is a problem that the picture after decoding is low in the quality thereof and is large in coding bits thereof.

The present invention, accomplished by taking the problem (s) mentioned above into the consideration thereof, and a preferred aim is to reduce the coding bits, while preventing the picture quality from being deteriorated.

According to an embodiment of the present invention, there is provided a decoding method for a motion picture, comprising the following steps of: a step for receiving information relating to motion search; a step for conducting the motion search with using a reference picture to be memorized and the information relating to saidmotion search; and a step for producing a prediction picture from the motion vector, which is obtained with said motion search, and the reference picture to be recoded.

The embodiment according to the present invention achieves preferable picture quality and reduces the coding bits.

These and other features, objects and advantages of the present invention will become more apparent from the following description when taken in conjunction with the accompanying drawings wherein:

Fig. 1 is a view for explaining a video coding apparatus, according to an embodiment of the present invention;

Fig. 2 is a view for explaining another video coding apparatus, according to the embodiment of the present invention;

Fig. 3 is a view for explaining an example of a motion search method, according to the embodiment of the present invention;

Fig. 4 is a view for explaining other example of a motion search method, according to the embodiment of the present invention;

Fig. 5 (a) is a view for explaining other example of a motion search method, according to the embodiment of the present invention;

Fig. 5 (b) is a view for explaining other example of a motion search method, according to the embodiment of the present invention;

Fig. 6 (a) is a view for explaining other example of a motion search method, according to the embodiment of the present invention;

Fig. 6 (b) is a view for explaining other example of a motion search method, according to the embodiment of the present invention;

Fig. 7 (a) is a view for explaining other example of a motion search method, according to the embodiment of the present invention;

Fig. 7 (b) is a view for explaining other example of a motion search method, according to the embodiment of the present invention;

Fig. 8 i8s a view for explaining an example of a data recording medium, according to the embodiment of the present invention; and

Fig. 9 is a view for showing an example of an error calculation method, according to the embodiment of the present invention.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims, as interpreted by the description and drawings.

Hereinafter, embodiments according to the present invention will be fully explained by referring to the attached drawings.

Also, it is assumed that, in each of the drawings, constituent elements attached with the same reference numerals have the same functions thereof.

Also, the expression, "a decoding-side motion search mode" within each of descriptions and drawings of the present specification, indicates a new coding mode, according to the present invention.

Also, the expression, a "residual component" within each of descriptions and drawings of the present specification, includes meaning similar to a "predicted error", too. Also, when expression is made by only an "error" in a prediction process, within each of descriptions and drawings of the present specification, then it means the "predicted error".

Also, the expression, "transmitted together with a flag" within each of descriptions and drawings of the present specification, includes a meaning, "transmitted with being included within the flag", too.

Also, the expression, "block prediction" within each of descriptions and drawings of the present specification, includes a meaning, "prediction by a unit of block", too.

Also, the expression, "pixel prediction" within each of descriptions and drawings of the present specification, includes a meaning, "prediction by a unit of pixel", too.

First of all, explanation will be made on a first embodiment of the present invention, by referring to the drawings attached herewith.

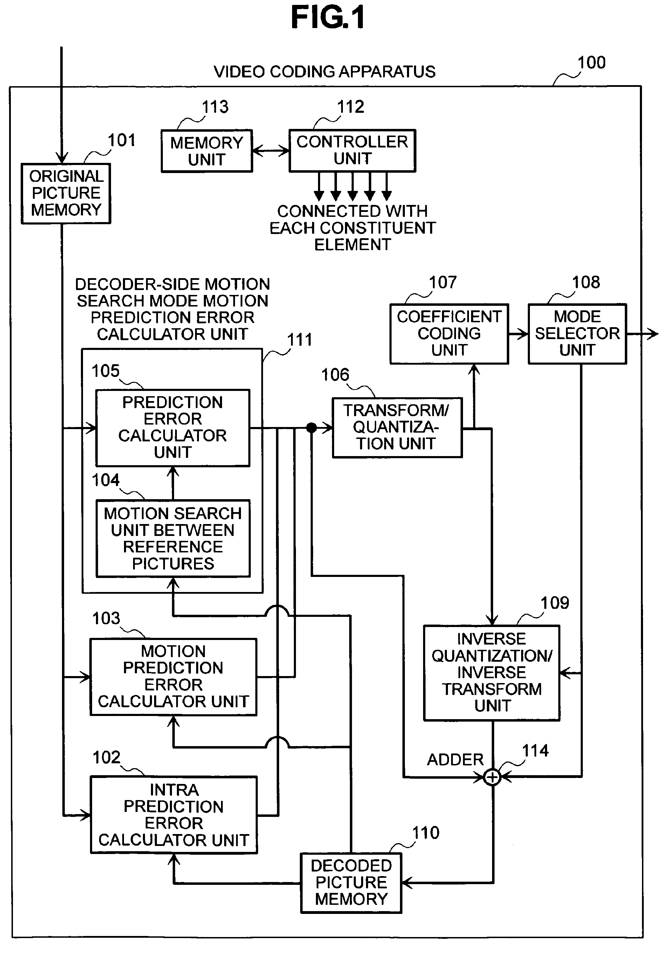

Fig. 1 shows an example of a block diagram of a video coding apparatus 100, according to an embodiment of the present invention.

The video coding apparatus 100 comprises, for example, an original picture memory 101, an intra prediction error calculate portion or unit 102, a motion prediction error calculate portion or unit 103, a motion prediction error calculate portion or unit 111 of decoding side motion search mode, a motion search portion or unit 104 between reference pictures, a prediction picture composer portion or unit 105, a transform/quantization portion or unit 106, a coefficient codingportionorunit 107, amode selector portion or unit 108, an inverse transform/inverse quantization portion or unit 109, a decoded picture memory portion or unit 110, a controller portion or unit 112, a memory portion or unit 113, and an adder 114. Herein, the motion search unit 104 between a reference picture is an element, which is owned by the motion prediction error calculator unit 111 of decoding side motion search mode.

Hereinafter, explanation will be made in details thereof, in particular, on the operation of each of the constituent elements of the video coding apparatus 100.

However, the operation of each of the constituent elements of the video coding apparatus 100 may be an autonomous one of itself, as will be mentioned below, for example. Or, the controller unit 112 may achieve it in cooperation with software, which is memorized in the memory unit 113, for example.

Firstly, the original picture memory 101, inputting an original picture, i.e., a coding target, conducts a buffering thereon, temporarily. Next, it enters into a step of prediction, for every unit for coding the picture. A unit of coding may be a microblock, for example, or may be a pixel. Hereinafter, there will be shown an example of processing it by the unit of the microblock, for example.

Within the following processes, prediction is made on each of the microblocks with a plural number of coding modes, for example, and among of those is selected one that is the highest in the coding efficiency by means of the mode selector unit 108, to be outputted as a coded stream.

In the intra prediction error calculator unit 102 is composed a prediction picture of an intra prediction mode among the coding modes. Thus, the difference is taken between the prediction picture, which is composed through the said prediction picture composing, and the original picture, and thereby outputting a residual component. As the method of that intra prediction may be applied the conventional method, which is described in the Non-Patent Document 1 mentioned above, for example. And, the intra prediction error calculator unit 102 also outputs the prediction picture produced therein.

In the motion prediction error calculator unit 103, composition of the prediction picture is conducted, with the mode of using the motion prediction among the coding modes, with using a reference picture stored in the decoded picture memory 110. The difference is taken between the prediction picture, which is produced through said composing of the prediction picture, and the original picture, and thereby outputting a residual component. With the skip mode and/or the direct mode included within existing P and B pictures, they are processed herein. For those methods may be applied the conventional method, which is described in the Non-Patent Document 1 mentioned above, for example. And, the motion prediction error calculator unit 103 also outputs the prediction picture produced therein.

Herein, though only one (1) of the motion prediction error calculator unit 103 is described, for the purpose of explanation thereof, but the video coding apparatus 100 may has it for each of the coding modes, respectively.

Next, within the motion prediction error calculator unit 111 of decoding side motion search mode is composed the predication picture of the decoding side motion search mode, which is a new coding mode according to the present invention. And, the difference is taken between the prediction picture, which is produced through said composing of the prediction picture, and the original picture, and thereby outputting a residual component.

Herein, the reference picturemotion search unit 104 searches corresponding points among a plural number of the reference pictures, between themselves, which are stored in the decoded picture memory 110. With this, motion vectors are calculated out. The details of the search method will be mentioned later.

Also, in the prediction picture composer unit 105 is composed a prediction picture of the picture of the coding target from the motion vectors, which are obtained within the reference picture motion search unit 104. Next, the difference is taken between the prediction picture, which is produced through said composing of the prediction picture, and the original picture, and thereby outputting a residual component. The details of the composing method will be mentioned later. Also, the prediction picture composer unit 105 owned by the motion prediction error calculator unit 111 of decoding side motion search mode also outputs the prediction picture produced therein.

Upon each residual component of the respective coding modes, which is outputted by the intra prediction error calculator unit 102, the motion prediction error calculator unit 103, or the motion prediction error calculator unit 111 of decoding side motion search mode, the transform/quantization unit 106 conducts the Discrete Cosine Transform process and the quantization process, and thereby converting into coding coefficients.

Further, the coefficient coding unit 107 conducts a variable-length coding process upon said coding coefficients, and thereby converting them into coded data, for each of the coding modes.

On the other hand, the inverse quantization/inverse transform unit 109 conducts the inverse quantization process and the inverse Discrete Cosine Transform process upon the coding coefficients, which are outputted by the transform/quantization unit 106. With this, the coding coefficients turn back to the residual components, again. Herein, the residual components are outputted to the adder 113.

Further, the adder 113 composes or synthesizes the said residual components and the prediction pictures, which are outputted from the calculation portion of the coding modes, and thereby producing a decoded picture block.

Herein, within the mode selector unit 108, for each coding mode, one (1) coding modes is selected through comparison of the coding bits of the coded data of each of the coding modes, which is obtained from the coefficient coding unit 107, or the picture quality of the decoded picture block of each coding mode, which the adder 113 produces, etc. Herein, as the method for the said selection may be applied a method of selecting a coding mode, which is preferable in the coding efficiency, etc., for example. Thus, studying on the coding bits of the coded data and the picture quality, or both of them, the selection thereof may be made so as to satisfy both of them much more.

Also, herein, decision on whether the picture quality is good or not, may be made by, for example, estimating the difference value (i.e., coding error) between the decoded picture block of the each coding mode, which is produced within the adder 113, and the block of the original picture corresponding thereto, etc.

For example, as a method for selecting the coding mode, which is the best in the coding efficiency, there is proposed the Rate-Distortion optimizing method (see the following reference document). With this method, the coding errors are calculated between the coding bits and the original picture after decoding, for all of the microblocks, and the best mode is selected in accordance with a cost calculation equation. (Reference Document) Gary Sullivan and Thomas Wiegand: "Rate-Distortion Optimization for Video Compression", IEEE Signal Processing Magazine, vol. 15, no. 6, pp. 74-90 (November, 1998).

Also, as a method other than the mentioned above, the method for determination may be changed depending on the weighting with paying consideration upon the picture quality, or with paying consideration upon the coding bits.

Next, the mode selector unit 108 provides an output together with a coding flag of the coding mode, which is selected, as a coded stream. In case where the decoding side motion search mode mentioned above is selected, it outputs a flag indicating that the motion search will be made on the decoding side. Herein, when the said decoding side motion search mode is selected, it does not matter whether the coded data of the residual component be outputted or not.

In this instance, when the coded data of the residual component is not outputted, there can be obtain an advantage that an amount of the coding bits comes to be small. Or, when outputting the coded data of the residual component, there can be obtain an advantage that the picture quality can be increased. In any case, when the said decoding side motion search mode is selected, no output of the motion vector is provided under the decoding side motion search mode. Accordingly, it is possible to obtain an advantage that the amount of the coding bits comes to be smaller than the coding mode for outputting the data of motion vector, among the conventional coding modes.

On the other hand, the adder 113 outputs the decoded picture block relating to the coding mode, which is selected through the selection by the mode selector unit 108, into the decoded picture memory 110.

Next, the decoded picture memory 110 produces the reference picture from the decoded picture block obtained in such the manner as was mentioned above, and store it.

With the coding apparatus explained by referring to Fig. 1 in the above, without transmission of the motion vector, it is possible to calculate the motion vector with high accuracy, through conducting the motion search process on the side of the decoding apparatus. With this, it is possible to compose or synthesize a prediction picture with less error therein on the side of the decoding apparatus.

Therefore, with the coding apparatus explained by referring to Fig. 1 in the above, it is possible to conduct the video coding with high coding efficiency and high picture quality, without the necessity of transmission of the motion vector.

Namely, with the coding apparatus explained by referring to Fig. 1 in the above, it is possible to convert the picture into the coded data, being smaller in the data amount or volume thereof, and also to conduct the video coding for enabling to decode with high picture quality.

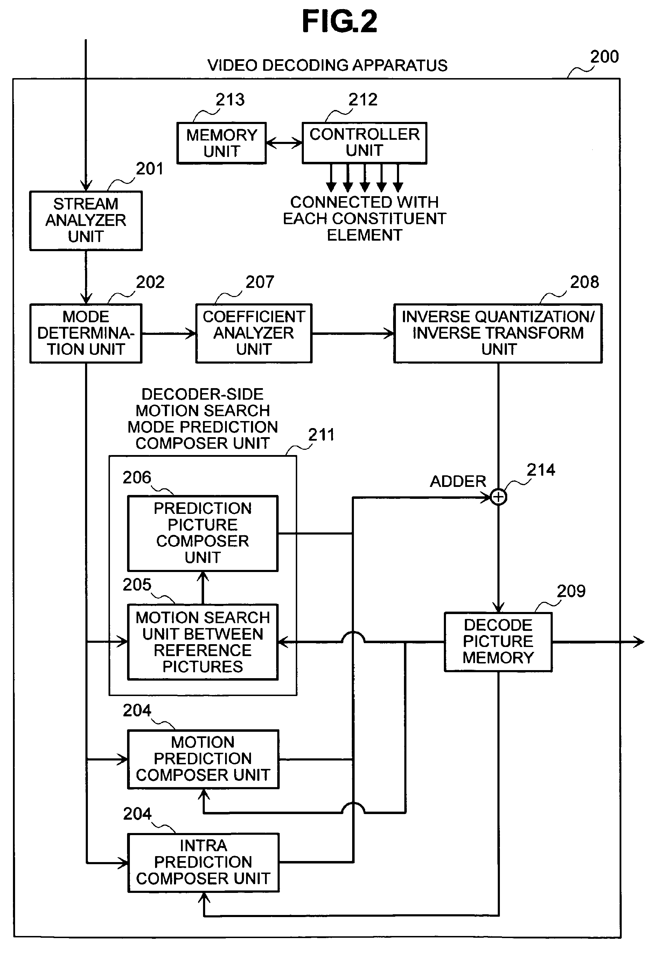

Next, Fig. 2 shows an example of a block diagram of a video decoding apparatus 200, according to an embodiment of the present invention.

The video decoding apparatus 200 comprises, for example, a stream analysis 201, a mode determination unit 202, an intra prediction composer unit 203, a motion prediction composer unit 204, a prediction composer unit 211 of decoding side motion search mode, a coefficient analyzer unit 207, a inverse quantization/inverse transform unit 208, a decoded picture memory 209, a controller unit 212, a memory unit 213, and an adder 214. Herein, a reference picture motion search unit 205 and a prediction picture composer unit 206 are elements, which are owned by the prediction composer unit 211 of decoding side motion search mode.

Hereinafter, detailed explanation will be made on the operation of each constituent element of the video decoding apparatus 200.

However, the operation of each constituent element of the video decoding apparatus 200 may be an autonomous one of the each constituent element, as will be mentioned below, for example. Or, the controller unit 112 may achieve it in cooperation with software, which is memorized in the memory unit 113, for example.

Firstly, the stream analysis 201 analyzes the coded stream inputted. Herein, the stream analysis 201 also conducts a data extracting process from a packet, and/or a process of obtaining information of various kinds of headers and flags. Further, it also conducts processes for each of the microblocks.

Next, the mode determination unit 202 determines the coding mode, which is designated by the flag or the like, for each of the microblocks. Within the following decoding process, a process is conducted corresponding to the coding mode of a result of the said determination. Hereinafter, explanation will be made on each of the coding modes.

First of all, in case where the coding mode is the intra coding, then the intra prediction composer unit 203 conducts composition of an intra prediction and the prediction picture. This method may be achieved by applying the conventional method, as was mentioned above. Herein, the intra prediction composer unit 203 outputs the prediction picture composed therein.

When the coding mode is the coding according to the conventional motion prediction, then the motion prediction composer unit 204 conducts the motion prediction and composition of the prediction picture. In this instance, there may be cases, for example, when using the motion vector including the coded stream, which is inputted into the video decoding apparatus 200, and when using the information of the microblocks neighboring with each other or relating to frames neighboring with each other, in the skip mode or the direct mode, etc. With this, in the similar manner, the conventional method may be applied therein. Herein, the motion prediction composer unit 204 outputs the prediction picture composed therein.

In case where the coding mode is the decoding side motion search mode, according to the embodiment of the present invention, then the prediction composer unit 211 of decoding side motion search mode conducts the motion prediction. With this, the composing of prediction picture is conducted.

In this instance, the reference picture motion search unit 205 conducts the motion search by searching the corresponding points between a plural number of reference pictures themselves, which are stored in the decoding picture memory 209. With this, the motion vector is calculated out. The details of the search method will be mentioned later. Herein, the reference picture motion search unit 205 may be similar one to the motion search unit between the reference pictures of the video coding apparatus 100.

Also, the prediction picture composer unit 206 composes the prediction picture of the coding target video, from the motion vector that is calculated by the reference picture motion search unit 205. Herein, the prediction picture composer unit 206 outputs the prediction picture composed therein.

As was explained in the above, the prediction picture is produced, depending upon the coding mode that the mode determination unit 202 determines.

On the other hand, the coefficient analyzer unit 207 analyzes the coded data of the each microblock included in the coded stream inputted, and outputs the coded data of the residual component to the inverse quantization/inverse transform unit 208.

The inverse quantization/inverse transform unit 208 conducts the inverse quantization process and the inversed discrete cosine transform process upon the coded data of the residual component. With this, the residual component is decoded. The inverse quantization/inverse transform unit 208 outputs the residual component decoded to the adder 214.

The adder 214 produces the decoded picture by composing the residual component, which is obtained from the inverse quantization/inverse transform unit 208, and the prediction picture outputted from the prediction composer unit of the coding mode, which the mode determination unit 202 determines. The adder 214 outputs the decoded picture into the decoded picture memory 209.

The decoded picture memory 209 stores therein the decoded picture, which the adder 214 produces. The decoded picture to be stored therein is outputted, from the decoded picture memory 209 into an outside of the video decoding apparatus. Also, depending on the necessity thereof, it may be used, as the reference picture, by means of the intra prediction composer unit 203, the motion prediction composer unit 204, or the prediction composer unit 211.

With the decoding apparatus shown in Fig. 2, which was explained in the above, it is possible to conduct the motion search process corresponding to a new coding mode, the motion vector of which will not be transmitted. With this, it is possible to produce the prediction picture with high accuracy, for the coded stream being high in the coding efficiency thereof, and thereby to decode the picture having picture quality being much higher.

Thus, with the decoding apparatus shown in Fig. 2, which was explained in the above, it is possible to conduct the picture decoding for enabling to decode the coded data, which is coded to be small much more in the data volume thereof, with picture quality being much higher.

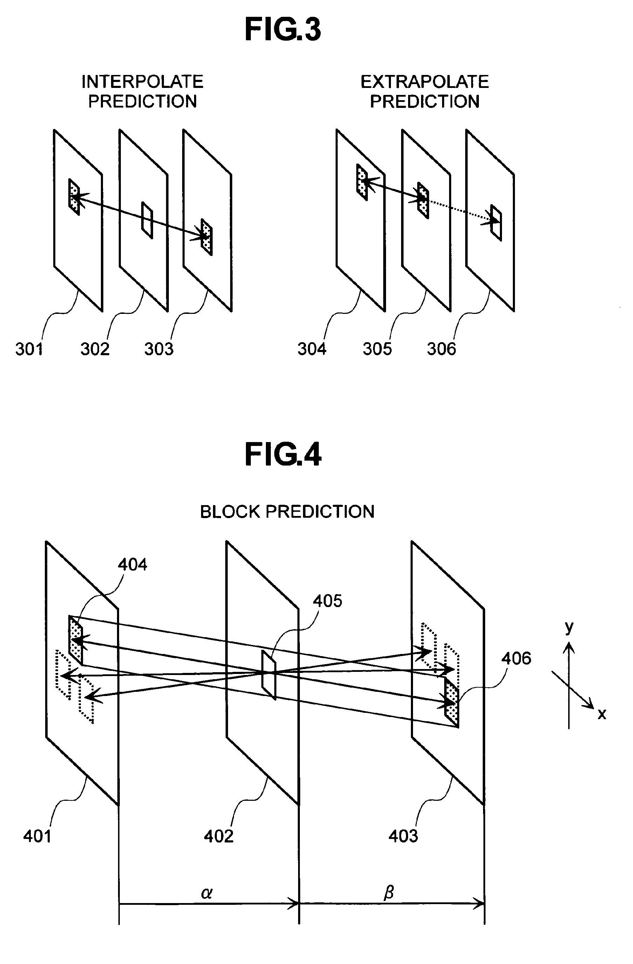

Next, by referring to Figs. 3, 4, 5(a) and 5(b), and 9, explanation will be given on examples of the motion search method and the prediction picture composing method, in particular, in the decoding side motion search mode mentioned above. The said motion search method and the prediction picture composing method are executed, for example, within the motion prediction error calculator unit 111 of decoding side motion search mode of the video coding apparatus 100, or the prediction composer unit 211 of the decoding side motion search mode of the video decoding apparatus 200.

Within the embodiment of the present invention, there are two (2) kinds of predictions in relation to the positional relationships of a reference frame within the motion search, such as, an interpolate prediction and an extrapolate prediction, for example. And there are also two (2) kinds of predictions in relation to the search method of the motion vector, such as, block prediction and pixel predication, for example.

Herein, those prediction methods can be combined with each other, freely. Therefore, any combination thereof can be used within the motion prediction error calculator unit 111 of decoding side motion search mode of the video coding apparatus 100, or the prediction composer unit 211 of the decoding side motion search mode of the video decoding apparatus 200.

However, when conducting the motion prediction within the prediction composer unit 211 of the decoding side motion search mode of the video decoding apparatus 200, it is preferable to execute the motion search and the composing of the prediction picture of the same combination to that, which is done within the motion prediction error calculator unit 111 of decoding side motion search mode of the video coding apparatus 100.

Therefore, within the mode selector unit 108 of the video coding apparatus 100, in particular, when selecting the decoding side motion search mode, a flag may be added, being indicative of which one of the interpolate prediction or the extrapolate prediction was used within the motion search when coding, onto the flag indicating that the motion search should be conducted on the decoding side. Or, a flag may be added to, being indicative of which one of the block prediction or the pixel prediction was used within the motion search when coding, onto the flag indicating that the motion search should be conducted on the decoding side. Those flags are recognized by means of the stream analysis 201 or the mode determination unit 202 of the video decoding apparatus 200, when decoding, and an instruction is transmitted to the prediction composer unit 211 of the decoding side motion search mode. The prediction composer unit 211 of the decoding side motion search mode, receiving the said instruction, conducts the motion search, which the above-mentioned flag indicates. With this, it is possible to execute the motion search method when decoding, in a manner almost same to the motion search method when coding.

Further, in explanation, which will be given below, explanation will be made with using an example of producing the prediction picture of the coding target frame, within the coding process. The similar method can be used in the motion search within the decoding process.

First of all, explanation will be made by referring to Fig. 3, on examples of the interpolate prediction and the extrapolate prediction within the decoding side motion search mode of the present embodiment.

The interpolate prediction may be used for prediction of B picture, for example. In Fig. 3, a reference numeral 302 depicts a coding target frame, 301 a reference frame, which is previous to the coding target frame in the time sequence, and 303 a reference frame subsequent to the coding target frame in the time sequence. In this manner, for example, the motion search is conducted through comparison between the reference picture, which is previous to the coding target frame, and the reference frame, which is subsequent thereto in the time sequence, so as to predict the pixels of the coding target frame; i.e., this is called the "interpolate prediction".

Also, the extrapolate prediction may be used for prediction of P picture, for example. In Fig. 3, a reference numeral 306 depicts a coding target frame, and 304 and 305 reference frames, which are previous to the coding target frame in the time sequence. The similar process may be made upon the frames, which are subsequent thereto in the time sequence. In this manner, the motion search is conducted through comparison between a plural number of reference pictures, which are previous thereto, so as to predict the pixels of the coding target frame subsequent to the said plural number of reference frames in the time sequence; i.e., this is called the "extrapolate prediction".

Within the motion vector search, according to the present invention, either one of the interpolate prediction or the extrapolate prediction may be applied. As a method for selecting the reference pictures with the interpolate prediction, those may be used, for example, having the smallest number in lists "L0" and "L1" defined in H. 264/AVC, for example. (Herein, withH. 264/AVC, within the lists "L0" are inserted the reference frame numbers of the past to the present frame, in a sequential order from that near to the present time-point, in the structures thereof. Also, within the list "L1" are inserted the future reference frame numbers, respectively, from that near to the present time-point, in a sequential order, in the structures thereof.) Also, numbers of the respective lists may be transmitted, in addition to the flag of the decoding side motion search mode. As a method for selecting the reference pictures with the extrapolate prediction, for example, two (2) pieces may be selected from those, having small number within "L0" or "L1" defined in H. 264/AVC. Or, each number of the lists may be transmitted, while adding it to the flag if the decoding side motion search mode. The number of pieces of the reference frames, to be used within each of the interpolate prediction or the extrapolate prediction, may be two (2) pieces, for example. However, the number of pieces thereof may be more than two (2). In this case, the mode selector unit 108 of the video coding apparatus 100 may transmits the number of pieces of that used in the motion prediction error calculator unit 111 of the decoding side motion searchmode, together with the flag . In this manner, with an increase of the number of the reference frames to be used in the prediction, it is also possible to rises up the prediction accuracy thereof.

Herein, also within the composition of the prediction picture in accordance with either one of the interpolate prediction or the extrapolate prediction, averaging may be made upon the corresponding pixels, when producing the pixels of the prediction picture. Also, the composition may be made in accordance with a ratio of distances between the coding target frame and the respective reference frames thereof. In any way, it is enough to determine values of the corresponding pixels of the picture within the coding target frame, with using a function value, taking the pixel value of the pixel on the reference frame to be a valuable thereof.

As was explained in the above, with using not only the interpolate prediction, but also the extrapolate prediction, it is possible to apply a coding method, being superior in the efficiency for input pictures of various patterns.

Next, explanation will be made on an example of the method for the block prediction, according to the present invention. As was mentioned above, the block prediction may be combined with either one of the interpolate prediction or the extrapolate prediction. Hereinafter, as an example, explanation will be made on the case where the interpolate prediction is made with using the frames 401 and 403, by one (1) piece thereof, each being the nearest to the coding target frame 402 in the front or the rear thereof. However, as was mentioned above, it does not matter how many number of pieces of the reference frames is. Also, the prediction may be made in the similar manner on the decoding side. Herein, when searching the motion vector with the block prediction, the search is conducted in bulk, upon a plural number of pixels, so as to conduct an error determination in combination of the plural number of pixels. For this reason, it is possible to achieve the search on the motion vectors, with high speed and high accuracy.

Comparing to the motion prediction of block matching within the existing coding method, the block prediction according to the present embodiment differs in an aspect that the motion prediction is made, not on the reference picture and the coding target picture, but upon the reference pictures themselves. In Fig. 4, it is assumed that a microblock 405 of the coding target frame, attached with the reference numeral 402, be a coding target microblock.

The search is conducted within a predetermined area or region, while conducting the comparison by a unit of block between the reference frame 401 previous in the time sequence and the reference frame 403 subsequent in the time sequence. In this instance, it is conducted so that the relationship of comparing blocks between the reference frame 401 previous in the time sequence and the reference frame 403 subsequent in the time sequence comes into the relationship shown in Fig. 4. Thus, comparison is made between the block 404 on the reference frame previous in the time sequence in Fig. 4 and the block 406 on the reference frame subsequent in the time sequence. In this instance, the motion search is conducted under a condition of the relationship, such as, the block 404 on the previous reference frame 401, the coding target block 405 on the coding target frame 402, and the block 406 on the subsequent reference block 403 are on a straight line. With doing this, the motion vector between both of them passes through the coding target block of the coding target frame 402, if selecting any one of the combinations, between the block on the previous reference frame 401 and the block on the subsequent frame 403.

For example, it is assumed that a distance in the time sequence is "$\alpha$" from the reference frame 401 to the coding target frame 402, and that a distance in the time sequence is "$\beta$" from the cording target frame 402 to the reference frame 403. And, it is also assumed that the position of the search block 404 on the reference frame 401 is (X1,Y1), the position of the coding target microblock 405 on the coding target frame 402 (X2,Y2), and the position of the search block 406 on the frame 403 (X3,Y3), respectively, then it is enough to bring the relationships of those to be as indicated by the following equations 1 and 2:

$$X3 = X2 - \frac{\beta}{\alpha} \times (X1 - X2) \qquad (\text{Eq. 1})$$

$$Y3 = Y2 - \frac{\beta}{\alpha} \times (Y1 - Y2) \qquad (\text{Eq. 2})$$

With using the condition of the equations (Eq. 1) and (Eq. 2) mentioned above, when giving the position (X2, Y2) of the coding target microblock 405 on the coding target frame 402 and the position (X1,Y1) of the search block 404 on the reference frame 401, then the position (X3,Y3) of the search block 406 on the frame 403.

The search is conducted within the predetermined area or region on the reference frames 401 and 403, under such the condition as was mentioned above.

Herein, with the method for setting up, the said predetermined region may be determined, by taking an amount or volume of calculations and the picture quality into the consideration, for the each apparatus. For example, on the reference frames 401 and 403, it may be a rectangular region, having a predetermined width "A" in the X-direction and a predetermined width "B" in the Y-direction, upon basis of the position same to the position (X2,Y2) of the coding target block 405 on the coding target frame 402, i.e., around the said reference position (X2, Y2). Or, it may be determined to be a circular area or region, within a predetermined distance "R", around the said reference position (X2, Y2) . Or, a boundary may be determined on whether a center of the search block falls or not, within the said predetermined area or region. Those setup conditions of the predetermined area or region may also be transmitted, together with the flag, by the mode selector unit 108 of the video coding apparatus 100.

However, the relationships of those (Eq. 1) and (Eq. 2) mentioned above are examples thereof, to the last, and they may be other conditions. However, in that instance, it is enough to transmit the information that enables to determine the relationship among the position of the search block of the reference frame 401, the position of the coding target microblock 405 of the coding target frame 402, and the search block 406 of the frame 403, together with the flag, by the mode selector unit 108 of the video coding apparatus 100.

Herein, the search result of the motion search mentioned above is calculated out, as will be mentioned below, for example. Thus, the error between the search block 404 of the reference frame 401 and the search block 406 of the reference frame 403 is obtained at each of the positions within the predetermined area or region mentioned above. Next, the search result is obtained to be the motion vector defined between the search block 404 and the search block 406 when the said error comes down to the minimum. The motion vector to be obtained may be that setting up a start point at a central position of the coding target block and an end point at the search block on the reference frame. Also, it may be a motion vector, setting up the start point and the end point, at the central positions of the search blocks on the reference frames, respectively.

Herein, the said error may be calculated in the following manner, for example. Thus, there are obtained a matrix, being made of the respective pixel values of the search block 404 on the reference frame 401, and a matrix of differences from the matrix made of the respective pixel values of the search block 406 on the reference frame 403. Next, upon the said values of the matrix of differences (i.e., the difference values between the pixel values of the search block on the reference frame 401 and the pixel values of the search block 406 on the reference frame 403), calculation is made of a sum of absolute values thereof, or a square sum of the respective values. Thus, the said sum of absolute values or the square sum thereof may be used as the error.

The prediction picture can be produced by composing the block 404 on the reference from 401 and the block 406 on the reference frame 401, which are indicated by the motion vector, calculated in the manner as was explained in the above.

Herein, in the production of the said prediction picture, it is possible to apply an averaged value, between the pixel value of the block 404 on the reference frame 401 and the pixel value of the block 406 on the reference frame 403, to be the pixel value of the prediction picture. It is also possible to apply a value, obtained through weighting the pixel value within the block of the reference frame, to be the pixel value of the prediction picture, with using the distance in the time sequence between the coding target frame and the reference frame. As an example of composing with using the said weighting, it may be conducted as follows. Thus, in case when assuming that the pixel value on one (1) pixel of the block 404 on the reference frame 401 is "C", the pixel value on the pixel at the position corresponding to the block 406 on the reference frame 403 is "D", the distance in the time sequence from the reference frame 401 to the coding target frame 402 is "α", and the distance in the time sequence from the coding target frame 402 to the reference frame 403 is "β", then the pixel value "E" may be calculated on the pixel at the position corresponding thereto upon the prediction picture, as is shown by the following (Eq. 3).

$$E = \frac{\beta}{\alpha + \beta} \times C + \frac{\alpha}{\alpha + \beta} \times D \qquad (Eq. \ 3)$$

Also, the example in the above is an example, and therefore the pixel value of the prediction picture may be determined in accordance with other calculation method. In any way, the pixel value of the pixel corresponding thereto on the prediction picture may be determined by the function values taking the pixel values of the pixels on the reference frame as the variables, which are obtained as the result of the motion search.

In such the manner as was mentioned above, composition is conducted between the block prediction and the prediction picture. Also with the extrapolate prediction, since differing therefrom only in the positional relationship of the blocks, therefore it can be processed in the similar manner.

Also, in the case of the extrapolate prediction shown in Fig. 3, for example, the direction of an arrow of the time distance "β" comes to be opposite, comparing to that in the case of the interpolate prediction mentioned above. In this instance, when applying the (Eq. 1), (Eq. 2) and (Eq. 3) mentioned above therein, in particular for "β", it may take a value of minus.

As was explained in the above, searching the motion vector with an aid of the block prediction, it is possible to search the motion vector with high speed and high accuracy.

Also, as was explained in the above, while searching the motion vector between the blocks corresponding thereto on the reference frames, but not on the motion vector taking the target block as the end point, and conducting the prediction with using this, it is possible to calculate out the motion vector, if there is no target frame. This is effective, inparticular, when decoding.

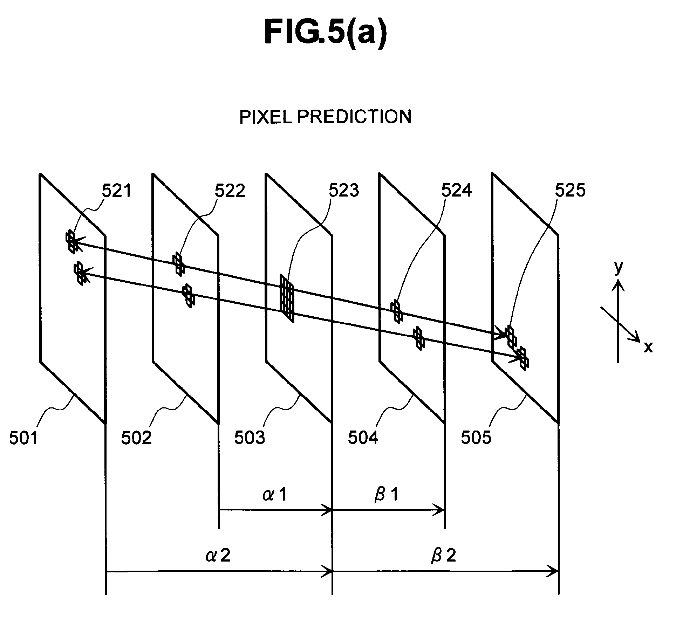

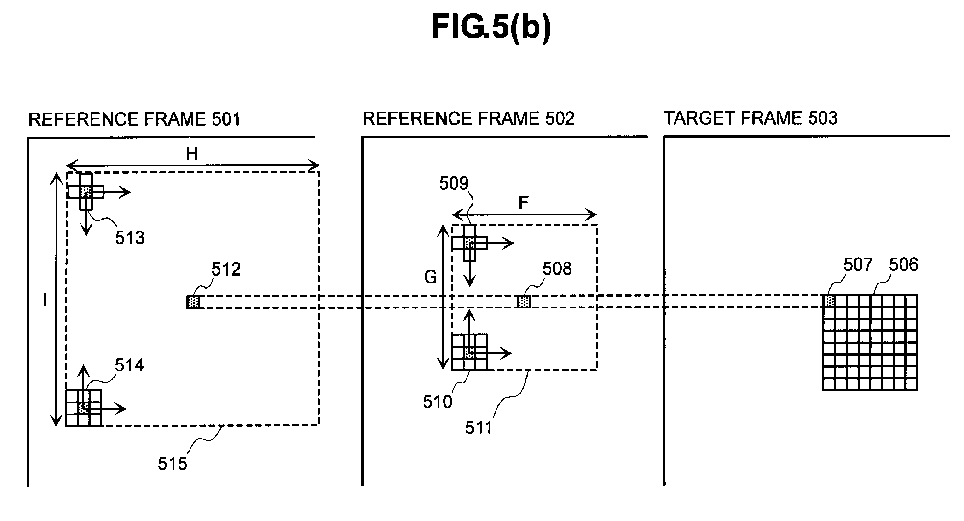

Next, explanation will be made of an example of the method for the pixel prediction, by referring to Figs. 5(a) and 5(b). As was mentioned above, the pixel prediction can be combined with any one of the interpolate prediction or the extrapolate prediction. Further, as was mentioned above, the number of pieces of the reference frames does not matter. Herein, explanation will be given on the case when conducting the interpolate prediction with using two (2) pieces of frames 501 and 502, and 504 and 505, for each, locating at the nearest to the coding target frame 503, in the front and the rear thereof, hereinafter. Also, on the decoding side may be conducted the prediction in the similar manner. Herein, when searching the motion vector through the pixel prediction, it is possible to execute the motion search, correctively, upon the pictures having complex motions, which cannot be divided by a unit of the block.

Herein, within the pixel prediction, the motion vector is obtained for each pixel, respectively, on the target microblocks 506 on the coding target frame 503. For example, no information of the coding target frame 503 may be used also when coding. When decoding, the coding target frame 503 in the figure corresponds to the decoding target frame. The said frame does not exist when starting the decoding thereof.

First of all, consideration is paid on obtaining the motion vector in relation to one (1) pixel 507 at the left-upper on the coding target microblock. Here, the search is conducted with the predetermined area or region, while conducting the comparison by a unit of pixel, within the reference frame 501, the reference frame 502, the reference frame 504 and the reference fame 505.

In this instance, the search is conducted so as to bring the relationship of comparing the blocks, for example, within the reference frame 501, the reference frame 502, the reference frame 504 and the reference fame 505, into the relationship shown in Fig. 5 (a) . Thus, the motion search is conducted, under the condition of relationship, i.e., alighting a searching pixel 521 on the reference frame 501, a searching pixel 522 on the reference frame 502, a coding target pixel 523 on the coding target frame 503, a searching pixel 524 on the reference frame 504 and a searching pixel 525 on the reference fame 505, on a straight line, in Fig. 5(a).

With this, while selecting any one of the combinations of the respective searching pixels on the reference frame 501, the reference frame 502, the reference frame 504, and the reference frame 505, the motion vector passing the said searching pixel can pass through the coding target pixel on the coding target frame 503.

Herein, for example, as is shown in Fig. 5 (a), assumption is made that the distance on the time sequence is "α2" from the reference frame 501 to the coding target frame 503, the distance on the time sequence is "α1" from the reference frame 502 to the coding target frame 503, the distance on the time sequence is "β1" from the coding target frame 503 to the reference frame 504, and the distance on the time sequence "β2" from the coding target frame 503 to the reference frame 505, respectively. Also, when assuming that the position is (X11, Y11) on the searching pixel 521 of the reference frame 501, the position is (X12,Y12) of the searching pixel 522 on the reference frame 502, the position is (X13,Y13) of the searching pixel 523 on the coding target frame 503, the position is (X14, Y14) of the searching pixel 524 on the reference frame 504, and the position is (X15,Y15) of the searching pixel 525 on the reference frame 505, then the respective relationships of those may be as shown by the following (Eq. 4), (Eq. 5), (Eq. 6), (Eq. 7), (Eq. 8) and (Eq. 9), for example:

$$X12 = X13 + \frac{\alpha 1}{\alpha 2} \times (X11 - X13) \qquad (\mathrm{Eq.}\ 4)$$

$$Y12 = Y13 + \frac{\alpha 1}{\alpha 2} \times (Y11 - Y13) \qquad (\mathrm{Eq.}\ 5)$$

$$X14 = X13 - \frac{\beta 1}{\alpha 2} \times (X11 - X13) \qquad (\mathrm{Eq.}\ 6)$$

$$Y14 = Y13 - \frac{\beta 1}{\alpha 2} \times (Y11 - Y13) \qquad (\mathrm{Eq.}\ 7)$$

$$X15 = X13 - \frac{\beta 2}{\alpha 2} \times (X11 - X13) \qquad (\mathrm{Eq.}\ 8)$$

$$Y14 = Y13 - \frac{\beta 2}{\alpha 2} \times (Y11 - Y13) \qquad (\mathrm{Eq.}\ 9)$$

With using the conditions of the (Eq. 4), (Eq. 5), (Eq. 6), (Eq. 7), (Eq. 8) and (Eq. 9) mentioned above, when giving the position (X13, Y13) of the coding target pixel 523 on the coding target frame 503, and the position (X11,Y11) of the searching pixel 521 on the reference frame 501, then the position (X12,Y12) of the searching pixel 522 on the reference frame 502, the position (X14,Y14) of the searching pixel 524 on the reference frame 504, and the position (X15, Y15) of the searching pixel 525 on the reference frame 505 are determined.

Next, explanation will be given on the predetermined search area or region mentioned above, by referring to Fig. 5 (b) . This Fig. 5 (b) shows the relationship between the coding target pixel on the coding target frame 503, and the search area or region on the reference frame 501 and the reference frame 502.

Herein, any one of the coding target pixel 507 on the coding target frame 503, the pixel 508 on the reference frame 501, and the pixel 512 on the reference frame 502 is located at the same position to each other, in the position of the pixel on the each frame. In this instance, the search reason on the reference frame 501 may be determined to a region 515 defined around the pixel 512, and the search region on the reference frame to a region 511 defined around the pixel 8, for example.

In this instance, where there is the condition satisfying the relationships of the (Eq. 4) and (Eq. 5), in relation to the coding target pixel 507 of the coding target frame 503, the pixel 508 on the reference frame 501, the pixel 512 on the reference frame 502, the it is enough to bring the area of the search region 515 and the area of the search region 511 to be similar in the figures to each other. Or, for example, it is enough to bring them into the condition of satisfying the followings; i.e., $F=(\alpha1/\alpha2)\times H$ and $G=(\alpha1/\alpha2)\times I$, when assuming that the horizontal width of the region 515 is "H" and the vertical width thereof is "I" and the horizontal width of the region 511 is "F" and the vertical width thereof is "G". In this case, it is possible to determine the search area or region to be less in usefulness, i.e., dead areas, when align the coding target pixel 507 on the coding target frame 503, the pixel 508 on the reference frame 501 and the pixel 512 on the reference frame 502, on a straight line.

With using the condition of positions of the searching pixels on the reference frames, the explanations of which are given in the above, the motion vector search will be conducted, in relation to the predetermined region mentioned above.

Next, explanation will be made on the method for calculating the search result of the motion search mentioned above. Within the present embodiment, a template will be used, which is defined centering around the search position, when measuring the error between the reference frames of themselves. As the template may be used the template of four (4) neighboring pixels, such as, a template 509 or a template of as a template 513, shown in Fig. 5 (b), or may be used the template of eight (8) neighboring pixels, such as, a template 510 or a template 514. Or, there may be used a template having the region larger than that.

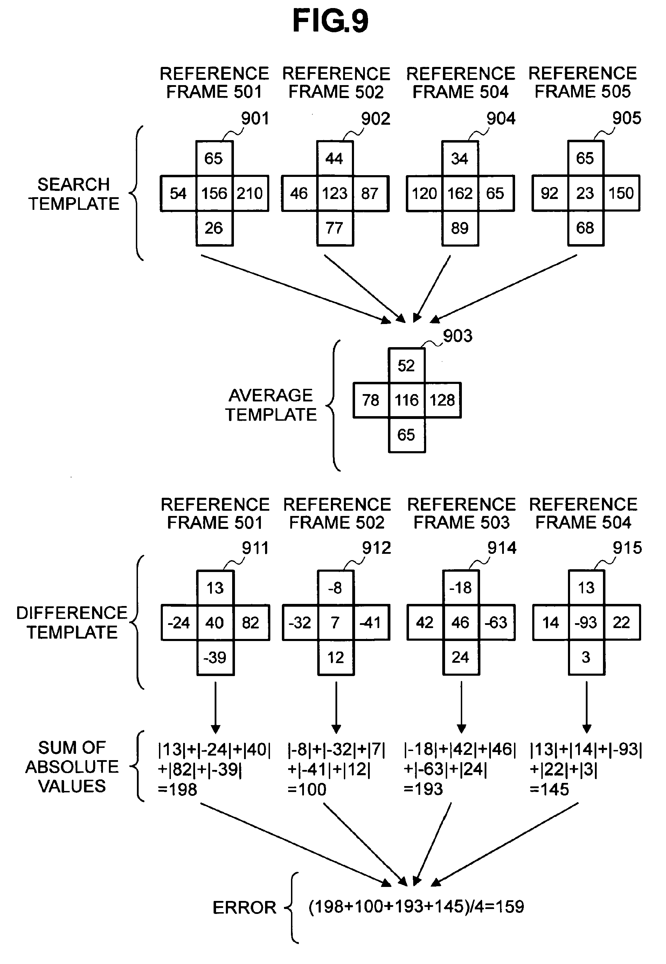

Herein, explanation will be made on the method for calculating the error, in case when using the template 509 or 513 having four (4) neighboring pixels, by referring to Fig . 9. Firstly, a combination of the pixel values is obtained on the template in relation to the searching pixel on each reference frame (i.e., in case of the plate of the four (4) neighboring pixels, five (5) pixels including the searching pixel and the four (4) pixels neighboring to that searching pixel) . In Fig. 9 are shown a search template 901 on the reference frame 501, a search template 902 on the reference frame 502, a search template 903 on the reference frame 503, and a search template 904 on the reference frame 504, respectively. Herein, next, an averaging process is conducted on the pixel values for one (1) pixel corresponding to the search template on the each reference frame, and thereby producing an average template 903. Next, difference templates 911, 912, 914 and 915 are produced, which are produced by a process on difference between the search template and the said average template 903 on the each reference frame. Next, calculation is made on the sum of absolute values of those, which are contained within the each of the difference templates. Further, it is enough to average the sum of the absolute values of the difference templates, to be the value of the error. In this instance, without using the sum of the absolute values, but it is also possible to use the square sum thereof.

Calculation of the value of the error in this manner enables to make estimation, on whether the pixel value of the template in relation to the searching pixels on the each reference frame is near to the average thereof or not. Therefore, the smaller the said error value, the template indicates a value nearer or closer thereto, in relation to the searching pixels on the each reference frame.

Accordingly, in this case, at each of the positions within the search region is calculated the said error value, and also obtained the combination of the search template on the each reference template, so as to lower the sum of the errors down to the minimum, for example. Herein, the vector lying on the straight line defined by the searching pixels of the search templates on the each reference frame is made to be the motion vector of the coding target pixels. In this case, also the motion vector to be obtained may be that, which has the coding target pixel as the start point and the each searching pixel as the end point thereof. Or, it may be the motion vector, taking both the start point and the end point, on the respective searching pixels.

Also, the method for calculating the errors should not be restricted to that mentioned above. For example, no average template 903 may be produced in Fig. 9. In this case, a difference template may be produced of the search template on the each reference frame. In more details thereof, from the search templates 901, 902, 904 and 905 shown in Fig. 9, selection is made on a combination of two (2) search templates for each, and the difference template is produced for each, respectively. Thus, in the example of the present figure are produced the difference templates of six (6) ways of the combinations, i.e., the search templates 901 and 902, the search templates 901 and 903, the search templates 901 and 904, the search templates 902 and 903, the search templates 902 and the 904, and the search templates 904 and 905. The sum of the absolute values of those contained in each of the said six (6) difference templates, or the square sum thereof is calculated, and the average value of those is calculated out, for example. This value can be estimated to be the error. In this case, also the smaller the said error value, the pixel values on the search templates on the each reference frame are near or come close to each other.

However, the explanation of the calculation of the error given in the above is made by referring to the template of the four (4) neighboring pixels, such as, the template 509 or the template 513, for example, but the error can be obtained in the similar manner, with using the eight (8) neighboring pixels, such as, the template 510 or the template 514, for example. But, the difference between the both leis in only the difference of the number of the pixel values included in each template.

Next, in Fig. 5(a), a prediction pixel value is produced for the target pixel on the coding target frame 503. The prediction pixel value may be calculated out by averaging the values of the searching pixels on the each reference frame, locating at the position of the motion vector mentioned above. Or, the calculation may be made by treating the weighting thereon, in accordance with the distance of time sequence from the coding target frame. An example of composition with using the said weighting may be conducted, as follows. Thus, when assuming that the pixel value at the searching pixel 521 is "J" on the reference frame 501, the pixel value at the searching pixel 522 is "K" on the reference frame 502, the pixel value at the searching pixel 524 is "L" on the reference frame 504, the pixel value at the searching pixel 525 is "M" on the reference frame 505, the distance of time sequence is "$\alpha2$" from the reference frame 501 to the coding target frame 503, the distance of time sequence is "$\alpha1$" from the reference frame 502 to the coding target frame 503, the distance of time sequence is "$\beta1$" from the coding target frame 503 to the reference frame 504, and the distance of time sequence is "$\beta2$" from the coding target frame 503 to the reference frame 505, respectively, then it is enough to calculate out a pixel value "N" of the prediction pixel, as is shown by the following (Eq. 10), for example:

$$N = \frac{\left( \dfrac{1}{\alpha2} \times J + \dfrac{1}{\alpha1} \times K + \dfrac{1}{\beta1} \times L + \dfrac{1}{\beta2} \times M \right)}{\left( \dfrac{1}{\alpha2} + \dfrac{1}{\alpha1} + \dfrac{1}{\beta1} + \dfrac{1}{\beta2} \right)} \qquad \text{(Eq. 10)}$$

Also, the example in the above is an example, and therefore the pixel value of the prediction picture may be determined in accordance with other calculation method. In any way, the pixel value of the pixel may be determined by the function values taking the pixel values of the pixels on the reference frame as the variables, which are obtained as the result of the motion search.

In such the manner as was mentioned above, composition is conducted between the block prediction and the prediction picture. Also with the extrapolate prediction, since differing therefrom only in the positional relationship of the blocks, therefore it can be processed in the similar manner.

Also, in the case of the extrapolate prediction shown in Fig. 3, for example, the direction of an arrow of the time distance "$\beta$" comes to be opposite, comparing to that in the case of the interpolate prediction mentioned above. In this instance, when applying the (Eq. 4) to (Eq. 10) mentioned above therein, in particular for "$\beta$", it may take a value of minus. With application of the (Eq. 4) to (Eq. 10) when the number of pieces of the reference frames differs from that of the explanation given in the above, the number of equations may be increased or decreased corresponding to the number of pieces of the reference frames.

With conduction of such motion search and composition of the prediction picture by the unit of pixel, as was mentioned above, upon all the pixels within the target microblock, the pixel prediction and the composition of the prediction picture can be conducted.

With conducting the motion vector through the pixel prediction explained in the above, the motion search can be conducted with correctness, even for such the picture having the complex motions that they cannot be divided or separated by a unit of the block.

Also, similar to that shown in Fig. 4, not upon the motion vector ending at the target block, but searching on the motion vector between the blocks corresponding thereto on the reference frame, and conducting the prediction with using this, it is possible to calculate out the motion vector if there is no target frame. This is effective, in particular, when decoding.

Although the explanation of those Figs. 3, 4, 5(a), 5(b) and 9 mentioned above was given on the prediction by a unit of pixels of an integer, but the motion search may be conducted by a unit of pixels of small number. In this case, with using the conventional technology, such as, H. 264/AVC, etc., for example, the each reference frame may be enlarged to the picture of accuracy of the pixels of small number through an interpolation filter, to be treated with the similar process thereon.

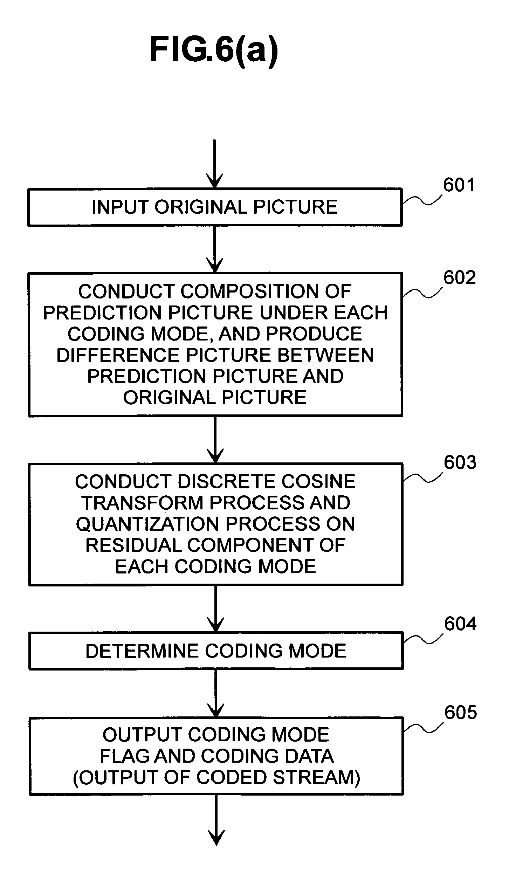

Next, explanation will be made on an example of flows of the coding method, according to an embodiment of the present invention, by referring to Fig. 6(a).

First of all, in a step 601, an original picture is inputted, to be the coding target. For example, the step 601 may be conducted by the original picture memory 101 of the video coding apparatus 100. Next, in a step 602, composing is made on the prediction picture under the each coding mode, for one (1) piece of picture of the original pictures, which are obtained in the step 601, and a residual component is calculated out between the prediction picture and the original picture. For example, the step 602 may be conducted within the intra prediction error calculator unit 102, the motion prediction error calculator unit 103, and the motion prediction error calculator unit 111 of decoding side motion search mode, etc., of the video coding apparatus 100, for each of the coding modes. The details of processes in the step 602 may be conducted, for example, as was shown in each of the explanations of the intra prediction error calculator unit 102, the motion prediction error calculator unit 103, and the motion prediction error calculator unit 111 of decoding side motion search mode, in Fig. 1 mentioned above. Next, in a step 603, the discrete cosine transform process and the quantization process are conducted upon the residual component under the each coding mode, which is calculated out in the step 601, and thereby calculating the coding coefficient. For example, the step 603 may be conducted within the transform/quantization unit 106 of the video coding apparatus 100. In the step 603, further, a variable-length coding process may be conducted on the said coding coefficient. For example, the said variable-length coding process may be conducted within the coefficient coding unit 107 of the video coding apparatus 100. In any case, within the step 603, the data after processing is outputted in the form of the coded data. Next, in a step 604, comparison is made on a result of the video coding for the each coding mode, on which the process of the step 603 was conducted, so as to determine the coding mode to be outputted for the said video. For example, the step 604 may be conducted within the mode selector unit 108 of the video coding apparatus 100. The details of processes in the step 604 may be conducted, as was shown by the explanation in Fig. 1 mentioned above. Next, in a step 605, the coded data under the coding mode, which is selected in the step 604, is outputted as a coded stream. In this instance, for example, in case when the decoding side motion search mode is selected, there is provided the output of the coding, including the coding mode flag therein. For example, the step 605 may be conducted within the mode selector unit 108 of the video coding apparatus 100. Also, the details of processes in the step 605 may be conducted, as was shown by the mode selector unit 108 in Fig. 1 mentioned above.

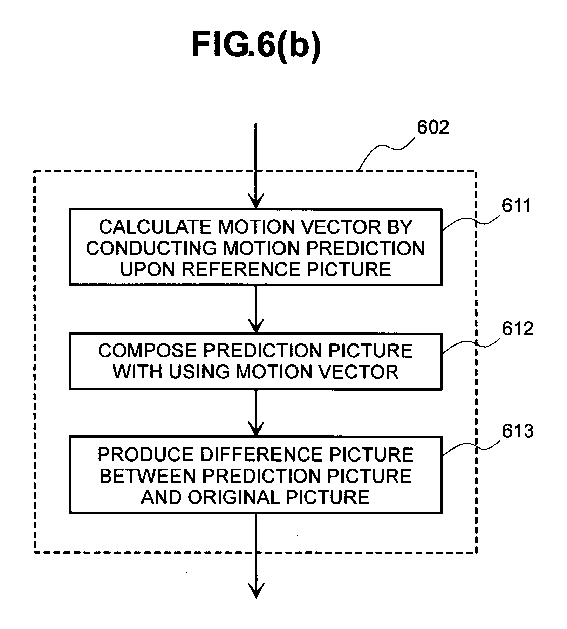

Next, explanation will be made on an example of the detailed flows, for composing the prediction picture and calculating the residual component, in relation to the decoding side motion search mode within the step 602 mentioned above, by referring to Fig. 6(b). However, with composing the prediction picture and calculating the residual component under the coding mode, but other than the decoding side motion search mode shown in Fig. 6 (b), the conventional methods may be applied, for example, which are conducted within the intra prediction error calculator unit 102 and the motion prediction error calculator unit 103 of the video coding apparatus 100 shown in Fig. 1 mentioned above.

First of all, in a step 611, the motion search between the reference pictures is executed on one (1) pieces of picture of the original pictures, which are obtained in the step 601 mentioned above, and thereby calculating out the motion vector. For example, the step 611 may be conducted within the reference picture motion search unit 104 of the video coding apparatus 100. The details of processes in the step 611 may be conducted, as was shown by the explanation of the reference picture motion search unit 104 shown in Fig. 1, and each explanation of the motion search shown in Figs. 3, 4, 5(a) and 5(b). Next, in a step 612, the prediction picture is composed with using the motion vector, which is calculated in the step 611 . Forexample, the step 612 may be conducted within the prediction picture composer unit 105 of the video coding apparatus 100. The details of processes in the step 612 may be conducted, as was shown by the explanation of the prediction picture composer unit 105 shown in Fig. 1, and each explanation of the composition of the prediction picture shown in Figs. 3, 4, 5(a) and 5(b) . Next, in a step 613, the residual component is calculated, by taking the difference between the prediction picture and the original picture, which is obtained in the step 612. For example, the step 613 may be also conducted within the prediction picture composer unit 105 of the video coding apparatus 100. The details of processes in the step 613 may be conducted, as was shown by the explanation of the prediction picture composer unit 105 shown in Fig. 1.

With the coding method shown in Fig. 6, the explanation of which was given in the above, it is possible to calculate the motion vector with high accuracy, by conducting the motion search process on the decoding process side, but without transmitting the monition vector. With this, it is possible to conduct the composition of the prediction picture, less in the error thereof, on the decoding process side.

Therefore, with the coding method shown in Fig. 6, the explanation of which was given in the above, there is no necessity of transmitting the motion vector, and it is also possible to achieve the video coding with high coding efficiency.

Thus, with the coding method shown in Fig. 6, the explanation of which was given in the above, it is possible to transfer the video or picture into the coded data, being much smaller in the data amount or volume thereof, and also to conduct the video coding, which can be decoded with much higher picture quality.

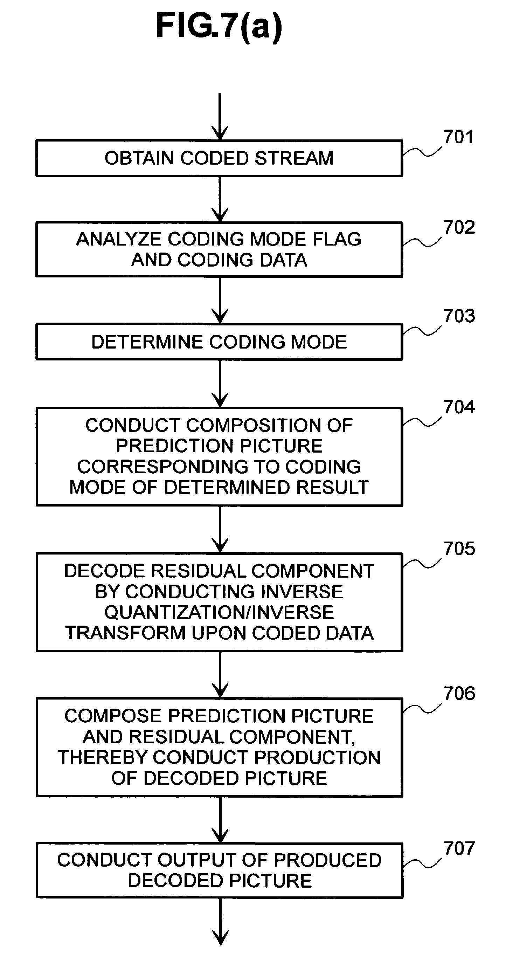

Next, explanation will be made on an example of flows of the decoding method, according to an embodiment of the present invention, by referring to Fig. 7(a).

First of all, in a step 701 is obtained the coding steam, to be a decoding target. For example, the step 701 may be conducted within the stream analyzer unit 201 of the video decoding apparatus 200. Next, in a step 602 are analyzed the coding mode flag and the coded data, which are contained in the coded stream obtained in the step 701. For example, the step 702 may be also conducted within the stream analyzer unit 201 of the video decoding apparatus 200. The details of processes in the step 702 may be conducted, for example, as was show by the explanation of the stream analyzer unit 201 shown in Fig. 2 mentioned above. Next, in a step 703, with using the coding mode flag analyzed within the step 702, determination is made upon the coding mode, in relation to the one (I) coding unit (i.e., the block unit or the pixel unit, etc.) included within the said coded data. For example, the step 703 may be conducted within mode determination unit 202 of the video decoding apparatus 200. Next, in a step 704 is conducted composing of the prediction picture corresponding to the coding mode, which is determined in the step 703. With the details of processes in the step 704, the process for composing the prediction picture may be conducted within the intra prediction composer unit 203, the motion prediction composer unit 204, and the prediction composer unit 211 of decoding side motion search mode, etc., of the video decoding apparatus 200 shown in Fig. 2, in case when the coding mode corresponds thereto, respectively, depending on the determined coding mode, for example. The details of processes in the step 704 may be conducted, for example, as was shown by each explanation of the intra prediction composer unit 203, the motion prediction composer unit 204, and the prediction composer unit 211 of decoding side motion searchmode shown in Fig. 2 mentioned above.

Next, in a step 705, a portion or part of the coded data is analyzed, in relation to the one (1) coding unit mentioned above in the step 702, among the coded data included within the coded stream, which is obtained in the step 701, and the inverse quantization process and the inverse discrete cosine transform process are made upon the said coded data, thereby decoding the residual component in relation to the one (1) coding unit mentioned above. For example, the process in the step 705 may be conducted within the coefficient analyzer unit 207 and the inverse quantization/inverse transform unit 208 of the video decoding apparatus 200. The details of processes in the step 705 may be conducted, for example, as was shown by each explanation of the coefficient analyzer unit 207 and the inverse quantization/inverse transform unit 208 shown in Fig. 2 mentioned above. Next, in a step 706 are composed the prediction picture, which is produced in the step 704, and the residual component, which is decoded in the step 705, i.e., conducting production of the decoded picture. For example, the process in the step 706 may be conducted within the adder 214 of the video decoding apparatus 200. Next, in a step 707 is outputted the decoded picture, which is produced in the step 705. For example, the process in the step 707 may be conducted within the decoded picture memory 209 of the video decoding apparatus 200.

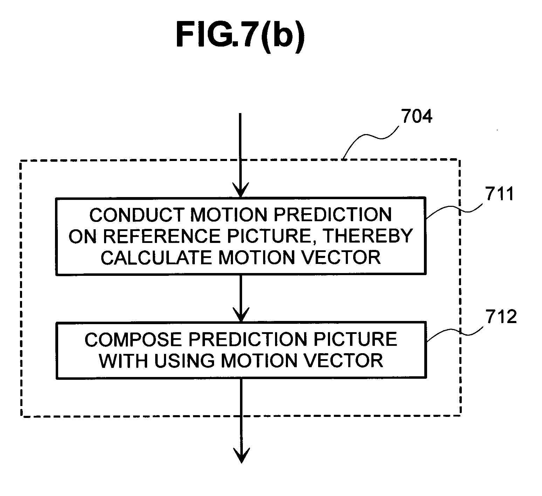

Next, explanation will be made on the detailed flows for composing the prediction picture in the step 704, in case when determining to be the decoding side motion search mode in the step 703 mentioned above, by referring to Fig. 7(b). However, when determining to be the coding mode other than that decoding side motion search mode in the step 703, for example, there may be applied the conventional method, such as, that conducted within the intra prediction composer unit 203, or that conducted within the motion prediction composer unit 204 of the video decoding apparatus 200 shown in Fig. 2.

In Fig. 7 (b), since the coding mode determined in the step 703 is the decoding side motion search mode, then first of all, in a step 711 is conducted the motion search with using the reference picture for the decoding target picture. Herein, the decoding target picture is a picture or video of the above-mentioned one (1) coding unit, the coding mode of which was determined in the step 703. For example, the step 711 will be conducted within the motion search unit 205 between the reference pictures shown in Fig. 2 mentioned above. The details of processes in the step 711 may be conducted, as was shown by the explanation of the motion search unit 205 between the reference pictures shown in Fig. 2, and the each explanation in relation to the motion search shown in Figs. 3, 4, 5(a) and 5(b) mentioned above. Next, in a step 712 is composed the prediction picture with using the motion vector, which is calculated in the step 711. For example, the step 712 may be conducted within the prediction picture composer unit 206 of the video decoding apparatus 200. The details of processes in the step 712 may be conducted, as was shown by the prediction picture composer unit 206 shown in Fig. 2, and the each explanation in relation to the prediction picture composition shown in Figs. 3, 4, 5(a) and 5(b) mentioned above.

With the decoding method shown in Fig. 7 explained in the above, it is possible to conduct the motion search process corresponding to a new coding mode, the motion vector of which will not be transmitted. With this, it is possible to produce the prediction picture with high accuracy, and thereby to conduct the decoding of pictures, with much higher picture quality thereof.

Namely, with the decoding method shown in Fig. 7 explained in the above, it is possible to achieve the video decoding, for decoding the coded data, which is coded to be smaller in the data amount or volume thereof, with higher picture quality thereof.

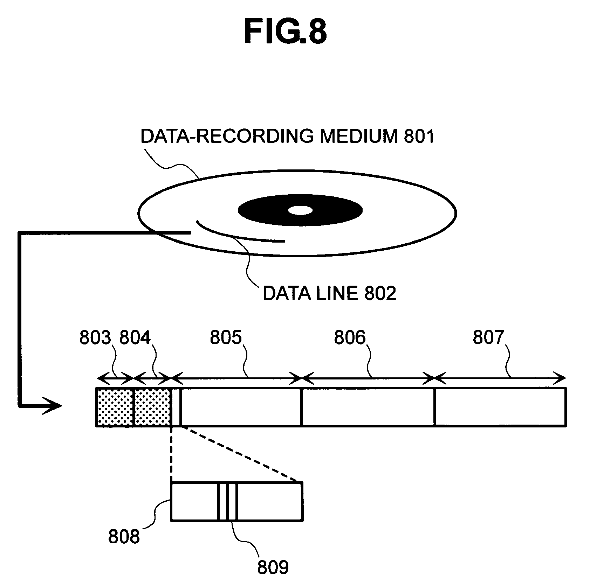

Next, Fig. 8 shows an example of a data-recording medium, according to an embodiment of the present invention.

The coded stream, which is produced by the coding apparatus according to the embodiment of the present invention, is recorded as a data line 802 on the data-recording medium 801, for example. The data line 802 is recorded in the form of the coded stream in accordance with a predetermined grammar, for example. Hereinafter, explanation will be made with an assumption, that a portion or part of H.264/AVC is changed.

First, with H.264/AVC, the stream is built up with the followings; a sequence parameter set 803, a picture parameter set 804 and slices 805, 806 and 807. Hereinafter, an example will be shown, where one (1) piece of picture is stored within one (1) slice.

Within an inside of each slice are included information 808 relating to the respective microblocks. Within the inside of the information relating to the microblocks, there is an areas or regions for recording the coding mode for each of the microblocks, respectively, for example, and this is assumed to be a coding mode flag 809.

Next, the decoding side motion search mode, according to the embodiment of the present invention, is recorded into the coding mode flag 809, in the similar manner to the other intra coding mode and the motion predict coding mode, as a one (1) kind or sort of the coding modes. Herein, the motion vector information relating to the microblocks, which are coded with the decoding side motion search mode, according to the embodiment of the present invention, will not be recorded on the data-recording medium 801. Also, with the coefficients of the residual components relating to the microblocks, which are coded with the said decoding side motion search mode, they may be recorded on the data recording medium 801 or not. In this instance, within the decoding process when there is no coefficient of the residual component, the prediction picture, which is produced for the said microblock, comes to be the decoded picture for that microblock, as it is, in the similar manner to that of the conventional skip mode.

Also, herein, when applying the block prediction explained in Fig. 4, as the prediction method, for example, on the B picture may be conducted the interpolation with using one (1) piece thereof, which are the nearest or closest in the lists "L0" and "L1", for each. On the P picture, the extrapolation may be conducted with using two (2) pieces thereof, which are the nearest or closest in the list "L0". Also, in case when applying the pixel prediction explained in Figs. 5(a) and 5(b), among the B pictures, the interpolation may be conducted with using two (2) pieces thereof, which are the nearest or closest in the lists "L0" and "L1", for each. In this instance, the reference frame to be used for the motion vector search may be recorded on the data-recording medium 801. Also, the flag designating the block prediction or the pixel prediction may be recording on the data recording medium 801. Or, on the data recording medium may be recorded a flag, designating of which one should be applied, between the interpolation and the extrapolation, on the B picture.

With the data-recording medium shown in Fig. 8 explained in the above, it is possible to record the video data with higher picture quality, with the data amount or volume, being much smaller thereof.

However, any combination of any one of the embodiments shown in the figures, and any one of the methods, which are explained in the above, may be other embodiment of the present invention.

With the embodiments of the present invention, which are explained in the above, it is possible to achieve the new coding mode without coding the motion vector, i.e., the decoding side motion search mode for conducting the motion search on the decoding side.

Herein, the mode without transmitting the motion vector enables to reduce the coding bits, for that of the motion vector thereof. Also, without transmitting the motion vector, but with conducting the motion search on the decoding side, it is possible to produce the prediction picture with high accuracy.

Therefore, with adaptation of the said mode, it is possible to obtain both, i.e., high compression efficiency and production of prediction picture with high accuracy. With this, it is possible to achieve the coding method and the coding apparatus having high compression efficiency. And, it is also possible to achieve the decoding method and the decoding apparatus for producing the decoded picture, with much higher picture quality thereof.

Also, the embodiments shown in the respective figures and of the methods, etc. , can be applied in the followings, using those therein; i.e., a medium of recording the coded video coded stream therein, or a recoding apparatus, a reproducing apparatus, a mobile (or portable) phone, a digital camera, etc.

With the coding method, the coding apparatus, the decoding method and the decoding apparatus, according to the various embodiments of the present invention, which are explained in the above, it is possible to reduce the coding bits of the coded data, and also to prevent the decoded picture from deterioration of the picture quality thereof.

With the various embodiments of the present invention explained in the above, it is possible to reduce the coding bits, and to prevent the picture fromdeterioration of the picture quality. Thus, it is possible to achieve high compression rate and good or preferable picture quality.

**Claims**

**1.** A decoding method for a motion picture, comprising the following steps of:

a step for receiving information relating to motion search;
a step for conducting the motion search with using a reference picture to be memorized and the information relating to said motion search; and
a step for producing a prediction picture from the motion vector, which is obtained with saidmotion search, and the reference picture to be recoded.

**2.** The decoding method, as described in the claim 1, wherein said step for receiving the information relating to the motion search further receives coded data, and further comprises:

a step for decoding an error component by conducting an inverse quantization process and an inverse discrete cosine transform process upon said coded data; and

a step for composing said decoded error component and said prediction picture.

3. The decoding method, as described in the claim 1, wherein
said reference picture to be recorded is a plural number of pictures, and
said step for composing the prediction picture produces a part of one picture among said reference pictures, as the prediction picture, with using the motion vector, which is obtained through said motion search.

4. The decoding method, as described in the claim 1, wherein
said reference picture to be recorded is a plural number of pictures, and
said step for composing the prediction picture produces the prediction picture, by composing parts of the plural number of pictures of said reference pictures while applying a constant weighing on each thereof, respectively, with using the motion vector, which is obtained through said motion search.

5. The decoding method, as described in the claim 1, wherein
said step for conducting said motion search calculates a motion vector between a first reference picture and a second reference picture, which is time-sequentially subsequent to said first reference picture; and
said step for producing said prediction picture produces a prediction picture for a third reference picture, which is time-sequentially subsequent to said second reference picture.

6. A decoding method of a motion picture including a plural number of pictures, which are coded with using a plural number of codingmodes therein, saidplural number of codingmodes includes a coding mode accompanying a motion vector search on a decoding side, comprising the following steps of:

a step for conducting motion search between said plural number of pictures, so as to calculate information of motion vector, to be used in the coding mode accompanying said motion vector search on the decoding side; and
a step for producing a part of said picture, which is selected with using said motion vector, to be the prediction picture.

7. The decoding method, as described in the claim 6, wherein
said plural number of coding modes are those, each of which is selected by a block unit on each picture;
the motion picture including said plural number of pictures therein includes information of a residual component in relation to the block, upon which said coding mode accompanying the motion vector search on the decoding side is selected;
the step for producing said prediction picture produces a part of said picture to be the prediction picture by the block unit; and further
a step for composing said prediction picture and said residual component.

8. The decoding method, as described in the claim 7, wherein
the step for producing said prediction picture produces the prediction picture by composing block portions of the plural number of pictures, which are selected with using said motion, while applying a constant weighting on each block portion thereof.

9. The decoding method, as described in the claim 6, wherein
said plural number of coding modes are those, each of which is selected by a pixel unit on each picture;
the motion picture including said plural number of pictures therein includes information of a residual component in relation to the block, upon which said coding mode accompanying the motion vector search on the decoding side is selected;
the step for producing said prediction picture produces a part of said picture to be the prediction picture by the pixel unit; and further
a step for composing said prediction picture and said residual component.

10. The decoding method, as described in the claim 9, wherein
the step for producing said prediction picture produces the prediction picture by composing block portions of the plural number of pictures, which are selected with using said motion, while applying a constant weighting on each block portion thereof.

11. The decoding method, as described in the claim 6, wherein
said step for conducting said motion search calculates a motion vector between a first reference picture and a second reference picture, which is time-sequentially subsequent to said first reference picture; and
said step for producing said prediction picture produces a prediction picture for a third reference picture, which is time-sequentially subsequent to said second reference picture.

12. A coding method for coding information relating to difference between a prediction picture, which is composed with using motion search, and information relating to a motion vector, which is obtained by said motion search, with using a plural number of coding modes, for a motion picture having a plural number of pictures therein, comprises the following steps of:

    a step for selecting a reference picture form said pictures, under one coding mode among of said plural number of coding modes;
    a step for calculating the motion vector to be used in said coding mode;
    a step for selection a part of the reference picture with using said motion vector;
    a step for producing a part of said reference picture to be the prediction picture;
    a step for calculating a residual component of said prediction picture and said coding target picture;
    a coded data producing step for conducting a discrete cosine transform process and a quantization process and a variable-length coding process upon said residual component; and
    a step for outputting a coded stream including said coded data therein, wherein
    said plural number of coding modes includes a coding mode accompanying the motion vector search on the decoding side, and
    within said step for outputting the coded stream, a flag is outputted, in addition thereto, being indicative of production of the prediction picture by conducting the motion search on the decoding side.

13. The coding method, as is described in the claim 12, wherein
within the step for outputting the coded stream is outputted no data relating to the motion vector is outputted, which is calculated in the step for calculating it by said motion search.

14. The coding method, as is described in the claim 12, further comprising,
a step for selecting one coding mode among said plural number of coding modes, before the step for outputting said coded stream, wherein,
within the coded data producing step, further a coded data of the flag is produced, which indicates production of the prediction picture by conducting the motion search on the decoding side, when the coding mode accompanying the motion vector search on said decoding side within said step for selecting the coding mode.

15. The coding method, as is described in the claim 12, further comprising the following steps of:

    a step for producing the prediction picture for other plural numbers of coding modes than said one coding mode, among said plural number of coding modes;
    a step for calculating the residual component of the prediction picture and said coding target picture, for each of said other plural numbers of coding modes;
    a coded data producing step for conducting a discrete cosine transform process, a quantization process, and a variable-length coding process upon the residual component of each of said other plural numbers of coding modes; and
    a step for selecting the coded data to be outputted as the coded stream, among the coded data for said other plural numbers of coding modes and the coded data for said one coding mode.

16. The coding method, as is described in the claim 15, wherein said step for selecting the coded data makes selection, by comparing the coded data for each one of said other plural number of coding modes and the coded data for said one coding mode, in coding bits thereof.

17. The coding method, as is described in the claim 15, further comprising,
before said step for selecting the coded data, a step for further conducting a composing process, upon the coded data of said one coding mode and also on each of said other plural number of coding modes, with said prediction pictures, which are produced within an inverse quantization process, an inverse discrete cosine transform process, and each of coding modes, thereby producing a decoded picture for each of the coding modes, wherein
said step for selecting the coded data make selection by comparing picture qualities of the decoded pictures for each of said coding modes.

**18.** The coding method, as is described in the claim 12, wherein
the flag indicative of production of the prediction picture, therein information indicative of a unit of a size of a picture, upon which the motion search is conducted on the reference picture.

**19.** The coding method, as is described in the claim 12, wherein
the flag indicative of production of the prediction picture, with conducting the motion search on said decoding side, includes therein information designating the reference picture to be used in the motion search.

**20.** The coding method, as is described in the claim 12, wherein
a selection is made on either a combination of a first reference picture, including a picture time-sequentially previous to the picture of the coding target and a picture time-sequentially subsequent to the picture of said coding target, as the reference pictures, or a combination of a second reference picture, including a plural number of pictures time-sequentially previous to the picture of said cording target, among the plural number of pictures owned by said motion picture, within said step for selecting a portion of said reference picture, thereby determining the reference picture, and
the flag indicative of production of the prediction picture, with conducting the motion search on said decoding side, includes therein information indicative of selection of either the combination of said first reference picture or the combination of said second reference picture.

# FIG.1

VIDEO CODING APPARATUS

100

EP 1 936 998 A2

# FIG.2

VIDEO DECODING APPARATUS                                    200

20

# FIG.3

INTERPOLATE
PREDICTION

EXTRAPOLATE
PREDICTION

301    302    303

304    305    306

# FIG.4

BLOCK PREDICTION

404

405

406

y

x

401    402    403

α    β

# FIG.5(a)

PIXEL PREDICTION

# FIG.5(b)

REFERENCE FRAME 501     REFERENCE FRAME 502     TARGET FRAME 503

EP 1 936 998 A2

# FIG.6(a)

INPUT ORIGINAL PICTURE — 601

CONDUCT COMPOSITION OF PREDICTION PICTURE UNDER EACH CODING MODE, AND PRODUCE DIFFERENCE PICTURE BETWEEN PREDICTION PICTURE AND ORIGINAL PICTURE — 602

CONDUCT DISCRETE COSINE TRANSFORM PROCESS AND QUANTIZATION PROCESS ON RESIDUAL COMPONENT OF EACH CODING MODE — 603

DETERMINE CODING MODE — 604

OUTPUT CODING MODE FLAG AND CODING DATA (OUTPUT OF CODED STREAM) — 605

# FIG.6(b)

602

CALCULATE MOTION VECTOR BY
CONDUCTING MOTION PREDICTION
UPON REFERENCE PICTURE

611

COMPOSE PREDICTION PICTURE
WITH USING MOTION VECTOR

612

PRODUCE DIFFERENCE PICTURE
BETWEEN PREDICTION PICTURE
AND ORIGINAL PICTURE

613

# FIG.7(a)

```
┌──────────────────────────────┐  701
│      OBTAIN CODED STREAM      │
└──────────────────────────────┘
              │
              ▼
┌──────────────────────────────┐  702
│    ANALYZE CODING MODE FLAG   │
│       AND CODING DATA         │
└──────────────────────────────┘
              │
              ▼
┌──────────────────────────────┐  703
│     DETERMINE CODING MODE     │
└──────────────────────────────┘
              │
              ▼
┌──────────────────────────────┐  704
│   CONDUCT COMPOSITION OF      │
│     PREDICTION PICTURE        │
│   CORRESPONDING TO CODING     │
│  MODE OF DETERMINED RESULT    │
└──────────────────────────────┘
              │
              ▼
┌──────────────────────────────┐  705
│  DECODE RESIDUAL COMPONENT    │
│    BY CONDUCTING INVERSE      │
│   QUANTIZATION/INVERSE        │
│  TRANSFORM UPON CODED DATA    │
└──────────────────────────────┘
              │
              ▼
┌──────────────────────────────┐  706
│  COMPOSE PREDICTION PICTURE   │
│   AND RESIDUAL COMPONENT,     │
│  THEREBY CONDUCT PRODUCTION   │
│     OF DECODED PICTURE        │
└──────────────────────────────┘
              │
              ▼
┌──────────────────────────────┐  707
│  CONDUCT OUTPUT OF PRODUCED   │
│       DECODED PICTURE         │
└──────────────────────────────┘
              │
              ▼
```

# FIG.7(b)

```
                                              704
            ┌ ─ ─ ─ ─ ─ ─ ─ ─ ─ ─ ─ ─ ─ ─ ─ ┐
            │                                  │     711
            │  ┌──────────────────────────┐   │
            │  │  CONDUCT MOTION PREDICTION │   │
            │  │  ON REFERENCE PICTURE, THEREBY │
            │  │  CALCULATE MOTION VECTOR   │   │
            │  └──────────────────────────┘   │
            │                                  │     712
            │  ┌──────────────────────────┐   │
            │  │  COMPOSE PREDICTION PICTURE │  │
            │  │  WITH USING MOTION VECTOR  │   │
            │  └──────────────────────────┘   │
            │                                  │
            └ ─ ─ ─ ─ ─ ─ ─ ─ ─ ─ ─ ─ ─ ─ ─ ┘
```

# FIG.8

DATA-RECORDING MEDIUM 801

DATA LINE 802

803 804    805    806    807

808

809

# FIG.9

REFERENCE FRAME 501   REFERENCE FRAME 502   REFERENCE FRAME 504   REFERENCE FRAME 505

SEARCH TEMPLATE

901

|   | 65 |   |
|---|----|---|
| 54 | 156 | 210 |
|   | 26 |   |

902

|   | 44 |   |
|---|----|---|
| 46 | 123 | 87 |
|   | 77 |   |

904

|   | 34 |   |
|---|----|---|
| 120 | 162 | 65 |
|   | 89 |   |

905

|   | 65 |   |
|---|----|---|
| 92 | 23 | 150 |
|   | 68 |   |

AVERAGE TEMPLATE

903

|   | 52 |   |
|---|----|---|
| 78 | 116 | 128 |
|   | 65 |   |

REFERENCE FRAME 501   REFERENCE FRAME 502   REFERENCE FRAME 503   REFERENCE FRAME 504

DIFFERENCE TEMPLATE

911

|   | 13 |   |
|---|----|---|
| -24 | 40 | 82 |
|   | -39 |   |

912

|   | -8 |   |
|---|----|---|
| -32 | 7 | -41 |
|   | 12 |   |

914

|   | -18 |   |
|---|----|---|
| 42 | 46 | -63 |
|   | 24 |   |

915

|   | 13 |   |
|---|----|---|
| 14 | -93 | 22 |
|   | 3 |   |

SUM OF ABSOLUTE VALUES

|13|+|-24|+|40|
+|82|+|-39|
=198

|-8|+|-32|+|7|
+|-41|+|12|
=100

|-18|+|42|+|46|
+|-63|+|24|
=193

|13|+|14|+|-93|
+|22|+|3|
=145

ERROR

(198+100+193+145)/4=159

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **GARY SULLIVAN ; THOMAS WIEGAND.** Rate-Distortion Optimization for Video Compression. *IEEE Signal Processing Magazine,* November 1998, vol. 15 (6), 74-90